# EUROPÄISCHE PATENTANMELDUNG

(11) **EP 0 893 156 A2**
(43) Veröffentlichungstag der Anmeldung: **27.01.1999**
(21) Anmeldenummer: 98112968.7
(22) Anmeldetag: 13.07.1998
(51) Int. Cl.: B01J 20/18, B01D 53/047

(54) **Verfahren zur Herstellung eines mit Lithium Ionen und zweiwertigen Ionen ausgetauschten bindemittelhaltigen Zeolithgranulats des Typs A und dessen Verwendung zur adsorptiven Lufttrennung**

(30) Priorität: 23.07.1997 DE 19731574
(71) Anmelder: BAYER AG, 51368 Leverkusen (DE)
(72) Erfinder: Hees, Bruno, 40764 Langenfeld (DE); Puppe, Lothar Dr., 51399 Burscheid (DE); Reiss, Gerhard, 51375 Leverkusen (DE)

(57) **Zusammenfassung**

Die vorliegende Erfindung betrifft Lithium-Zeolith-Granulate des Typs A die einen Austauschgrad von 70 bis 100%, bezogen auf austauschbare Kationen aufweisen und neben einem Lithium-Austausch des Zeoliths einen begrenzten Austausch mit zweiwertigen Kationen aufweisen.

## Beschreibung

Die Aufgabe der vorliegenden Erfindung bestand darin, ein verbessertes Granulat bestehend aus Lithium A zu entwickeln sowie die Verwendung dieses verbesserten Granulats zur Herstellung von Stickstoff oder Sauerstoff aus Luft durch Druckwechseladsorption.

Die Erzeugung von Sauerstoff aus Luft bei Umgebungstemperaturen - wie -30°C bis +50°C - wird industriell in großem Umfang mit Molekularsieb-Zeolithen durchgeführt. Hierbei wird die bevorzugte Adsorption von Stickstoff (N₂) gegenüber Sauerstoff (O₂) ausgenutzt, d.h., Sauerstoff und Argon der Luft werden beim Durchströmen der Luft durch eine Zeolithschüttung am Austritt der Schüttung als Produkt aufgefangen. Die Desorption des adsorbierten Stickstoffs kann dann z.B. durch Evakuierung der Schüttung erfolgen. Für diesen Fall bezeichnet man den Prozeß als Vakuum-Swing-Adsorption (VSA), im Gegensatz zur ebenfalls bekannten Pressure-Swing-Adsorption (PSA) mit Desorption des Stickstoffs bei etwa Umgebungsdruck. Ein kontinuierlicher VSA-Prozeß ist durch folgende Verfahrensschritte gekennzeichnet:
a) Durchleiten von Luft durch eine Zeolithschüttung (z.B. bei Umgebungsdruck) und Abnahme von O₂-reichem Gas an der Austrittszone;
b) Evakuieren der Schüttung mit einer Vakuumpumpe auf einen Unterdruck beispielsweise von etwa 100 bis 400 mbar im Gegenstrom zur der Luftströmung;
c) Befüllen der Schüttung mit O₂-reichem Gas zur Luftströmung oder mit Luft im Gleichstrom zur Luftströmung auf Adsorptionsdruck oder nahezu auf Adsorptionsdruck.

Ziel der verschiedenen Prozesse ist stets eine hohe Produktrate - bezogen auf die eingesetzte Zeolithmenge - und eine hohe O₂-Ausbeute (Verhältnis der O₂-Menge im Produkt zu O₂-Menge der eingesetzten Luftmenge). Eine hohe O₂-Ausbeute schließt einen niedrigen Energiebedarf - bezogen auf die produzierte O₂-Menge - der Vakuumpumpe bzw des Luftkompressor - ein.

Bedingt durch die drei obengenannten Schritte hat man meist drei Zeolithschüttungen, d.h. drei Adsorber, die zyklisch betrieben werden.

Die Wirtschaftlichkeit derartiger Adsorptionsanlagen wird durch die Investition, wie z.B. Adsorptionsmittelmenge, Vakruumpumpengröße, und insbesondere durch die Betriebskosten, wie Stromverbrauch der Vakuumpumpe und/oder des Luftkompressors, beeinflußt. Es wurden deshalb Zeolithe entwickelt, mit denen es möglich ist, hohe Stickstoffadsorptionen im Bereich zwischen Adsorptionsdruck und minimalem Desorptionsdruck zu erreichen, so daß die eingesetzte Zeolithmenge Klein gehalten werden bzw. sogar reduziert werden konnte. Hierzu wird, wie in EP-A 0 374 631 beschrieben, Ca-Zeolith A eingesetzt. Weitere Entwicklungen auf diesem Gebiet zielen auf die Erhöhung der Selektivität des Stickstoffs gegenüber Sauerstoff ab.

Eine höhere Selektivität erzielt man durch den Einsatz von Lithium-Zeolith X (EP-A 297 542). Man erhält einen höheren Separationsfaktor (N₂-Beladung zu O₂-Beladung) sowie eine höhere N₂-Beladung gegenüber Na-Zeolith X.

Im US-Patent 5 174 979 werden mit Tonmineralien gebundene Granulate (20 % Tonanteil) beschrieben, deren Zeolithanteil aus Li-Zeolith A oder Li-Zeolith X besteht, wobei das Li₂O/Al₂O₃ Verhältnis des Li-Zeolith A-Granulats zwischen 10 und 70 % und das Li₂O/Al₂O₃-Verhältnis des Li-Zeolith X-Granulats zwischen 50 und 95 % liegt und der restliche Kationenanteil aus Calzium- oder Strontiumionen besteht. In Figuren 4, 5, 6 wird aufgezeigt, daß Li-Zeolith A mit eingetauschten Ionen von Lithium gegenüber einem Ca-Zeolith A in der N₂-Adsorption und in der N₂ zu O₂-Selektivität abfällt und ein reiner Li-Zeolith A die schlechtesten Eigenschaften aufweist.

Für den Einsatz in der Adsorptionstechnik werden die Zeolithe als bindemittelhaltige Förmlinge eingesetzt. Als Bindemittel bezeichnet man inaktive Bestandteile des Granulats, die das Zeolithpulver zu einem Granulat (Kugel oder Strangförmlinge) binden. Die N₂- und O₂-Beladung an dem inaktiven Binder ist minimal.

In der DE-A 3 401 485 ist die Herstellung SiO₂-gebundener Zeolith A- und Zeolith X-Granulate beschrieben.

Gemaß EP-A 0 170 026, insbesondere Beispiel 2, sind bruchfeste Granulate bekannt, die aus Ca-Zeolith A und einem SiO₂-Binder bestehen und gemäß EP-A 0 374 631 vorteilhaft zur Sauerstoffanreicherung von Luft eingesetzt werden.

Wesentliches nachteiliges Merkmal der Zeolithgranulate bestehend aus Na-Zeolith A und einem SiO₂-Binder ist die geringe Bruchfestigkeit der Granulate, wobei dies unabhängig von der Granulatform wie Kugel oder Stäbchen ist.

Die Behandlung des SiO₂-Binders eines Zeolith A, z.B. der Kugelform oder Stäbchen in Na-Zeolith A, mit Lösungen der Salze von Erdalkalikationen wie Mg, Ca und Sr erhöht stets die Bruchfestigkeit des Granulats.

Wie noch dargestellt wird, gelingt diese Erhöhung der Bruchfestigkeit eines Granulats bestehend aus Natrium-Zeolith A und einem SiO₂-Binder nicht bei einer Behandlung mit einer Lösung eines Lithiumsalzes.

Die Aufgabe der vorliegenden Erfindung bestand darin, ein bruchfestes Li-Zeolith A Granulat zur Verfügung zu stellen, das auf technisch einfache Weise herzustellen ist, das für die Lufttrennung im Druckwechselprozeß eingesetzt werden kann und das hohe Ausbeuten für Sauerstoffund hohe Produktraten gewährleistet.

Die Aufgabe wurde dadurch gelöst, daß abriebfeste, bruchfeste bindemittelhaltige Molekularsieb-Zeolith-Granulate hergestellt werden, welche dadurch gekennzeichnet sind, daß diese Granulate Zeolithe vom Typ Li-Zeolith A enthalten und mehrheitlich mit Lithium-Ionen und zusätzlich mit Calzium und/oder Strontium und/oder Magnesium-Ionen ausgetauscht sind und deren Verwendung zur adsorptiven Trennung von Luft in eine sauerstoffreiche und eine stickstoftreiche Phase im Druckwechselprozess.

Bevorzugt weist der Zeolith A einen Austauschgrad von 70 bis 100% (bezogen auf austauschbare Kationen) und besonders bevorzugt 70 bis 95% (bezogen aus austauschbare Kationen) auf Der Li-Zeolith A enthält 2 bis 25 Mol-%, bevorzugt 2 bis 20 Mol.-% und besonders bevorzugt 2 bis 10 Mol-% zweiwertige Kationen und einen Restnatriumanteil unter 5 % (0,05 Na₂O/Al₂O₃), bevorzugt unter 3 % Natriumionen.

Ein weiterer Gegenstand der Erfindung ist ein Verfahren zur Herstellung der erfindungsgemäßen Granulate, welches dadurch gekennzeichnet ist, daß pulverförmiger Zeolith vom Typ Na-A mit Bindemitteln wie geeignete Tone oder Tonmineralien gemischt wird und zu tonhaltigen Granulaten geformt wird, wobei der Tonanteil im fertigen Granulat 5 bis 50 Gew.-% betragen kann, und anschließend durch eine geeignete thermische Behandlung das Granulat verfestigt wird, das so erhaltene Granulat einer Behandlung mit einer zweiwertige Kationen enthaltenden Salzlösung unterzogen wird, an dem so behandelten Granulat ein Li-Austausch durchgeführt wird, wobei 70 bis 100% der austauschbaren Kationen im Zeolith ausgetauscht werden, und anschließend das ausgetauschte Granulat einer thermischen Behandlung bei Temperaturen von 200 bis 650°C unterzogen wird, um das Wasser zu entfernen. Bevorzugt erfolgt zusätzlich vor oder nach dem Li-Austausch ein Austausch mit zweiwertigen Kationen aus der Gruppe bestehend aus Magnesium, Calzium, Barium, Strontium, Eisen, Kobalt und/oder Nickel. Gegebenenfalls kann auch der Eintausch von zweiwertigen Kationen aus der Gruppe bestehend aus Magnesium, Calzium, Barium, Strontium, Eisen, Kobalt und/oder Nickel bereits am Zeolith Na-A Pulver und nicht erst am Granulat erfolgen.

Ein weiterer bevorzugter Gegenstand der Erfindung ist ein Verfahren zur Herstellung der erfindungsgemäßen Granulate, welches dadurch gekennzeichnet ist, daß pulverförmiger Zeolith vom Typ Na-A mit Kieselsol oder anderen SiO₂-haltigen Bindemitteln gemischt wird und zu SiO₂-gebundenen Granulaten verformt werden, das so erhaltene Granulat einer Behandlung mit einer zweiwertige Kationen enthaltenden Salzlösung unterzogen wird, an dem so behandelten Granulat ein Li-Austausch durchgeführt wird, wobei 70 bis 100% der austauschbaren Kationen im Zeolith ausgetauscht werden, und anschließend das ausgetauschte Granulat einer thermischen Behandlung bei Temperaturen von 200 bis 650°C unterzogen wird, um das Wasser zu entfernen. Bevorzugt erfolgt zusätzlich vor oder nach dem Li-Austausch ein Austausch mit zweiwertigen Kationen aus der Gruppe bestehend aus Magnesium, Calzium, Barium, Strontium, Kobalt und/oder Nickel.

Bevorzugt SiO₂-haltige Bindemittel sind z. B. Wassergläser, Kieselsole, Kieselgele, Aerosile oder Kieselsäurefüllstoffe. Besonders geeignet sind Kieselsole.

### Beispiele

Alle Granulatproben hatten eine Korngröße von 1 bis 2,5 mm, und wurden am Ende ihrer Herstellung mit einem heißen Stickstoffstrom von 600°C auf einen Wassergehalt unter 0,5 Gew.-% aktiviert. Die Aktivierung erfolgte wie folgt: Durch eine Schüttung bestehend aus dem Zeolithgranulat wurde der heiße Stickstoffstrom mit einer Raumgeschwindigkeit von 0,446 Mol/h/10 Liter Zeolith durchgeleitet, bis die Austrittstemperatur etwa 90 % des Wertes der Eintrittstemperatur erreichte danach die Aktivierzeit um 20% verlängert und danach der heiße Zeolith abgefüllt. Gebräuchliche Aktivierungstemperaturen liegen bei 300 bis 650°C, die angeführte Raumgeschwindigkeit kann im Falle der erfindungsgemäßen Zeolithgranulate ohne nennenswerte Änderung der Zeolithqualität in weiten Grenzen variiert werden. Neben Stickstoffkann auch Umgebungsluft verwendet werden, wobei trockenes Gas generell den Restwassergehalt reduziert. Neben festen Schüttungen sind auch Drehrohre zur Aktivierung gebräuchlich, in denen das Granulat kontinierlich unter Spülung mittels eines heißen Gasstromes durchgeführt wird.
- Proben:: Bei allen hergestellten Granulatproben wurde das gleiche Zeolithpulver als Ausgangsmaterial gewählt.

### Probe A (Ca-Zeolith A mit SiO₂-Binder)

Ein Zeolith A-Granulat wurde gemaß EP-A 0 170 026, Beispiel 2 hergestellt.

Ausgangsmaterial ist ein Granulat mit etwa 82% Na-Zeolith A und 18% SiO₂ als Binder, wobei durch Behandlung mit Calziumchloridlösung ein Ca-Austausch erfolgte. Das CaO/Al₂O₃-Verhältnis betrug etwa 0,75. Das Schüttgewicht des aktiven Granulats betrug 665 g/l.

### Probe B (Ca-Zeolith A mit Ton-Binder)

Ein Zeolith A-Pulver wurde einem üblichen Calziumaustausch unterzogen, mit Wasser gewaschen, angetrocknet, mit Ton zu Stäbchen von 1,6 mm Durchmesser verformt und bei 650°C entsprechend obiger Beschreibung aktiviert. Der Tonanteil im aktiven Granulat betrug 20 %, der Calziumaustausch lag bei 73 %. Das Schüttgewicht des aktiven Granulats betrug 630 g/l.

### Probe C (Li-Zeolith A mit SiO₂-Binder)

Ein Zeolith A-Granulat wurde analog EP-A 0 170 026, Beispiel 2 hergestellt. Ausgangsmaterial ist ein Granulat mit etwa 82% Na-Zeolith A und 18 % SiO₂ als Binder, wobei durch Behandlung mit Lithiumchloridlösung ein Li-Austausch erfolgte. Hierbei pumpte man 60 Liter 1-molare Lithiumchloridlösung pro Liter Granulat durch die Granulatschüttung. Die Temperatur betrug 85°C. Nach Beenden des Ionenaustausches wurde das Granulat mit Wasser gewaschen, und dann mit LiOH auf einem pH-Wert von 9 eingestellt. Der Austauschgrad (Li₂O/(Li₂O + Na₂O)) des Zeolithen lag nach dem Ionenaustausch bei über 99 %. Das Schüttgewicht des aktiven Granulats betrug 600 g/l.

### Probe D (Li-Zeolith A mit Ton-Binder)

Das Zeolith A-Granulat des Beispiels B aber ohne Calziumaustausch wurde mit Wasser befeuchtet und gemäß Beispiel C einem Lithium-Austausch unterzogen. Danach erfolgte die bereits beschriebene Aktivierung des Granulats bei 600°C. Der Austauschgrad (Li₂O/(Li₂O + Na₂O)) des Zeolithen lag nach dem Ionenaustausch bei über 99%. Das Schüttgewicht des aktiven Granulats betrug 615 g/l.

### Probe E (Li-Zeolith A mit teilweisem Calziumaustausch und SiO₂-Binder)

Ein Zeolith A-Granulat wurde gemäß Beispiel A einer Behandlung mit einer Calziumchloridlösung unterzogen, wobei der Austauschgrad etwa 50% betrug. Danach erfolgte nach einer Waschung des Granulats mit Wasser eine Behandlung mit einer Lithiumchloridlösung gemäß Beispiel C. Der Austauschgrad (Li₂O/(Li₂O + CaO + Na₂O)) des Zeolithen lag nach dem Ionenaustausch bei über 89%, wobei der CaO-Anteil etwa 10% betrug und der Na₂O-Anteil unter 1% lag. Das Schüttgewicht des aktiven Granulats betrug 640 g/l.

### Probe F (Li-Zeolith A mit teilweisem Calziumaustausch und SiO₂-Binder)

Ein Zeolith A-Granulat wurde gemäß Beispiel A einer Behandlung mit einer Calziumchloridlösung unterzogen, wobei der Austauschgrad etwa 75% betrug. Danach erfolgte nach einer Waschung des Granulats mit Wasser eine Behandlung mit einer Lithiumchloridlösung gemäß Beispiel C. Der Austauschgrad (Li₂O/(Li₂O + CaO + Na₂O)) des Zeolithen lag nach dem Ionenaustausch bei über 79%, wobei der CaO-Anteil etwa 20% betrug und der Na₂O-Anteil unter 1 % lag. Das Schüttgewicht des aktiven Granulats betrug 640 g/l.

### Probe G (Li-Zeolith A mit teilweisem Calziumaustausch und SiO₂-Binder)

Ein Zeolith A-Granulat wurde gemaß Beispiel A einer Behandlung mit einer Calziumchloridlösung unterzogen, wobei der Austauschgrad etwa 90% betrug. Danach erfolgte nach einer Waschung des Granulats mit Wasser eine Behandlung mit einer Lithiumchloridlösung gemäß Beispiel C. Der Austauschgrad (Li₂O/(Li₂O + CaO + Na₂O)) des Zeolithen lag nach dem Ionenaustausch bei über 64%, wobei der CaO-Anteil etwa 35% betrug und der Na₂O-Anteil unter 1 % lag. Das Schüttgewicht des aktiven Granulats betrug 640 g/l.

### Probe H (Li-Zeolith A mit teilweisem Strontium und SiO₂-Binder)

Ein Zeolith A-Granulat wurde gemaß Beispiel A einer Behandlung mit einer Strontiumchloridlösung unterzogen, wobei der Austauschgrad etwa 55% betrug. Danach erfolgte nach einer Waschung des Granulats mit Wasser eine Behandlung mit einer Lithiumchloridlösung gemäß Beispiel C. Der Austauschgrad (Li₂O/(Li₂O + SrO + Na₂O)) des Zeolithen lag nach dem Ionenaustausch bei über 84%, wobei der SrO-Anteil etwa 15% betrug und der Na₂O-Anteil unter 1 % lag. Das Schüttgewicht des aktiven Granulats betrug 640 g/l.

### Probe I (Lithium-Zeolith A mit teilweisem Calziumanteil und mit Ton-Binder)

Ein Zeolith A-Pulver wurde einem üblichen Calziumaustausch unterzogen, mit Wasser gewaschen, angetrocknet, mit Ton zu Stäbchen von 1,6 mm Durchmesser verformt und bei 650°C entsprechend obiger Beschreibung aktiviert. Der Tonanteil am aktiven Granulat betrug 20 %, der Calziumaustausch lag bei 50 %. Die Probe wurde mit Wasser befeuchtet und gemaß Beispiel C einem Lithium-Austausch unterzogen. Der Austauschgrad (Li₂O/(Li₂O + CaO + Na₂O)) des Zeolithen lag nach dem Ionenaustausch bei über 89%, wobei der CaO-Anteil etwa 10% betrug und der Na₂O-Anteil unter 1 % lag. Das Schüttgewicht des aktiven Granulats betrug 630 g/l.

### Probe K (Li-Zeolith A mit teilweisem Magnesiumaustausch und SiO₂-Binder)

Ein Zeolith A-Granulat wurde gemaß Beispiel A einer Behandlung mit einer Magnesiumchloridlösung unterzogen, wobei der Austauschgrad etwa 20% betrug. Danach erfolgte nach einer Waschung des Granulats mit Wasser eine Behandlung mit einer Lithiumchloridlösung gemäß Beispiel C. Der Austauschgrad (Li₂O/(Li₂O + MgO + Na₂O)) des Zeolithen lag nach dem Ionenaustausch bei über 89%, wobei der MgO-Anteil etwa 10 % betrug und der Na₂O-Anteil unter 1 % lag. Das Schüttgewicht des aktiven Granulats betrug 630 g/l.

Zur Beurteilung der Proben wurden folgende Eigenschaften der aktivierten Proben gemessen:

Bruchhärte, Stickstoff- und Sauerstoffadsorption bei 1.0 bar und 25°C und in einem Druckwechselprozeß die Lufttrennung bezüglich der Sauerstoffgewinnung.

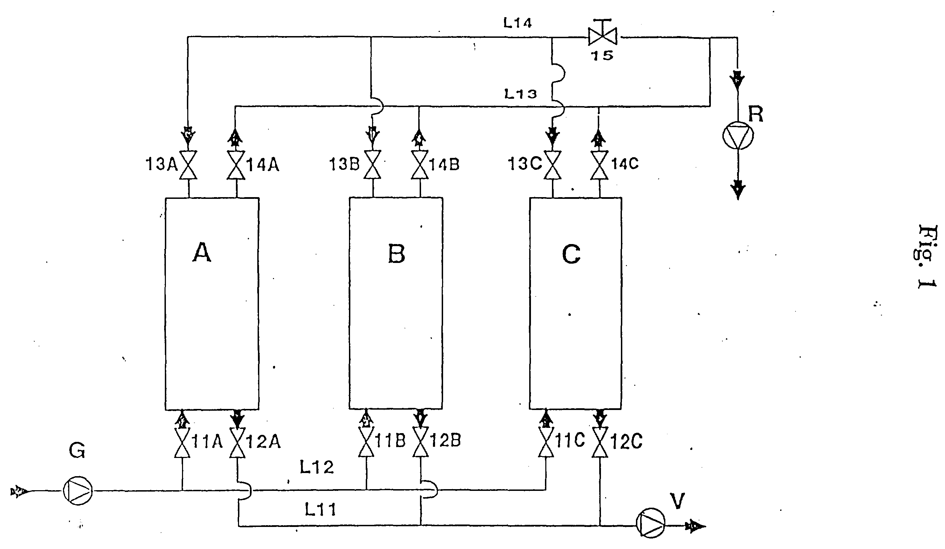

Dieser Druckwechselprozeß soll anhand der Figur 1 näher erläutert werden.

Die Anlage besteht aus folgenden Teilen:
- G =: Luftgebläse
- V =: Ölgetriebene Vakuumpumpe
- R =: Produktkompressor
- A/B/C =: Adsorber bestehend aus Metallsäulen mit einem Innendurchmesser von 56 mm und einer inneren Höhe von 2000 mm, gefüllt mit Zeolithgranulat, diese Säulen sind mit einem Wassermantel umgeben und stets auf+25°C temperiert.
- 11A-14C =: Magnetventile
- 15 =: manuelles Regelventil
- L11-L14 =: Zuführleitungen

### Prozessbeschreibung:

### Zeitraum 0-60 Sekunden

Trockene Luft strömt über Gebläse G durch Leitung L12 bei Umgebungsdruck von 1,03 bar (abs) in den mit Zeolithgranulat gefüllten Adsorber A, O₂-Produktgas verläßt Adsorber A über Ventil 14 A und gelangt über Leitung L 13 zum Produktgebläse R. Mit dem Produktgebläse R wird über eine nicht eingezeichnete Drossel der Produktstrom geregelt.

Gleichzeitig wird Adsorber C über Ventil 12C und Leitung L11 innerhalb 60 Sekunden von Atmosphärendruck auf 200 mbar evakuiert. Der Enddruck wird über eine nicht eingezeichnete Drossel vor der Vakuumpumpe eingestellt.

Gleichzeitig wird Adsorber B über Ventil 13B und Leitung L14 und Handventil 15 innerhalb der 60 Sekunden von 200 mbar auf Atmosphärendruck mit Produktgas befüllt.

Alle nicht erwähnten Ventile sind geschlossen.

### Zeitraum 60 - 120 Sekunden

Durch Adsorber B strömt die Luft, Adsorber C wird mit Produkt gefüllt, Adsorber A wird evakuiert.

### Zeitraum 120 - 180 Sekunden

Durch Adsorber C strömt die Luft, Adsorber A wird mit Produkt gefüllt, Adsorber B wird evakuiert.

Ermittelt wurde die Produktmenge hinter dem Kompressor R bei 90 %, und die abgepumpte Gasmenge.

Daraus können folgende Kenndaten errechnet werden. Die produzierte O₂-Menge im Produkt pro Molekularsiebmenge einer Schüttung innerhalb eines Adsorptionszyklus von 60 Sekunden (in mMol/g)und die O₂-Ausbeute (= O₂-Menge im Produkt bezogen auf die O₂-Menge in der eingesetzten Luft). Diese O₂-Ausbeute ist ein Druckwechselprozessen ein direktes Maß für den Energiebedarf zu Erzeugung des Sauerstoffs.

Es wurden folgende Werte ermittelt:

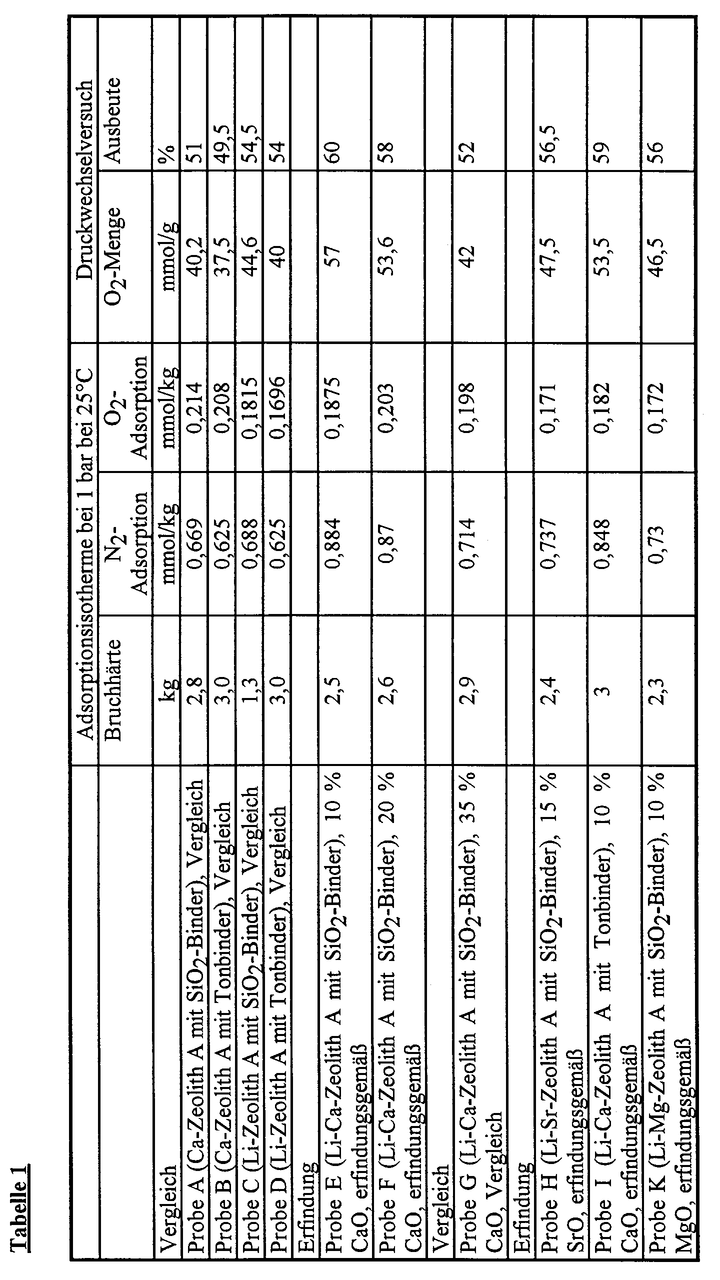

### Vergleich der Probe A und C

Durch einen vollständigen Eintausch von Lithiumionen in Zeolith A-Granulat mit SiO₂-Binder erhält man nur eine geringfügige Verbesserung der O₂-Ausbeute und der O₂-Produktrate gegenüber dem entsprechenden Ca-Zeolith A.

### Vergleich der Probe B und D

Durch einen vollständigen Eintausch von Lithiumionen in Zeolith A-Granulat mit Tonbinder erhält man nur eine geringfügige Verbesserung der O₂-Ausbeute und der O₂-Produktrate gegenüber dem entsprechenden Ca-Na-Zeolith A.

### Vergleich der Probe E + F (erfindungsgemäß) mit Probe A + C

Durch einen hohen Eintausch von Lithiumionen in Zeolith A-Granulat mit SiO₂-Binder und einem gleichzeitig begrenzten Eintausch von zweiwertigen Ionen wie Calzium erhält man eine erhebliche Verbesserung der O₂-Ausbeute und der O₂-Produktrate gegenüber dem entsprechenden hoch ausgetauschten Lithium Zeolith A und einem Ca-Na-Zeolith A.

### Vergleich der Probe I (erfindungsgemäß) mit Proben B + D

Durch einen hohen Eintausch von Lithiumionen in Zeolith A-Granulat mit Tonbinder und einem gleichzeitig begrenzten Eintausch von zweiwertigen Ionen wie Calzium erhält man eine erhebliche Verbesserung der O₂-Ausbeute und der O₂-Produktrate gegenüber dem entsprechenden hoch ausgetauschten Lithium Zeolith A oder einem Ca-Na-Zeolith A.

### Vergleich der Probe H (erfindungsgemäß) mit Probe C

Durch einen hohen Eintausch von Lithiumionen in Zeolith A-Granulat mit SiO₂-Binder und einem gleichzeitig begrenzten Eintausch von zweiwertigen Ionen wie Strontium erhält man eine deutliche Verbesserung der O₂-Ausbeute und der O₂-Produktrate gegenüber dem entsprechenden hoch ausgetauschten Lithium Zeolith A.

### Vergleich der Probe G (Vergleich) mit Proben E + F (erfindungsgemäß)

Durch einen hohen Eintausch von Lithiumionen in Zeolith A-Granulat und einem gleichzeitig hohen Eintausch von zweiwertigen Ionen wie Calzium erhält man eine geringfügige Verbesserung der O₂-Ausbeute und der O₂-Produktrate gegenüber dem entsprechenden hoch ausgetauschten Lithium Zeolith A und einem Ca-Na-Zeolith A.

### Vergleich der Probe K (erfindungsgemäß) mit Probe C

Durch einen hohen Eintausch von Lithiumionen in Zeolith A-Granulat mit SiO₂-Binder und einem gleichzeitig begrenzten Eintausch von zweiwertigen Ionen wie Magnesium erhält man eine Verbesserung der O₂-Ausbeute und der O₂-Produktrate gegenüber dem entsprechenden hoch ausgetauschten Lithium Zeolith A.

Die Versuche zeigen, daß im Falle der Herstellung eines Zeolith A-Granulats mit Lithium-Ionen die adsorptive Trennung der Luft durch den Einbau einer begrenzten Menge von zweiwertigen Ionen wie Calzium, Strontium und durch fast vollständige Eleminierung des Natriumanteils unter 2% die Eigenschaften gegenüber dem vollständig mit Lithium ausgetauschten Produkt erheblich verbessert werden können und hierbei zu hoher Anteil an zweiwertigen Ionen die Eigenschaften deutlich verschlechert.

## Patentansprüche

1. Lithium-Zeolith-Granulate des Typs A dadurch gekennzeichnet, daß diese Granulate einen Austauschgrad von 70 bis 100%, bezogen auf austauschbare Kationen aufweisen und neben einem Lithium-Austausch des Zeoliths ein begrenzter Austausch von 2 bis 25% mit zweiwertigen Kationen erfolgt.

2. Lithium-Zeolith-Granulate des Typs A gemaß Anspruch 1, dadurch gekennzeichnet, daß diese Granulate einen Restnatriumanteil unter 5% enthalten.

3. Lithium-Zeolith-Granulate des Typs A gemäß der Ansprüche 1 und 2, dadurch gekennzeichnet, daß als zweiwertige Kationen Calcium und/oder Magnesium und/oder Strontium ausgetauscht werden.

4. Verfahren zur Herstellung der Lithium-Zeolith-Granulate des Typs A gemäß der Ansprüche 1 bis 3, dadurch gekennzeichnet, daß pulverförmiger Zeolith vom Typ Na-A mit geeigneten Tonen oder Tonmineralien gemischt und zu Granulaten geformt wird, das Granulat durch thermische Behandlung verfestigt wird, das Granulat dann einer Behandlung mit einer zweiwertige Ionen enthaltenden Salzlösung unterzogen wird, danach an diesem Granulat 70 bis 100 % der Kationen gegen Lithium ausgetauscht werden und das Granulat schließlich einer thermischen Behandlung bei Temperaturen von 200 bis 650°C unterzogen wird.

5. Verfahren zur Herstellung von Lithium-Zeolith-Granulaten des Typs A gemäß Anspruch 4, dadurch gekennzeichnet, daß pulverförmiger Zeolith vom Typ A mit Kieselsol oder anderen geeigneten SiO₂-haltigen Bindemitteln zu SiO₂-haltigen Granulaten verformt werden.

6. Verwendung der Granulate gemäß der Ansprüche 1 bis 5 für die Lufttrennung in einem Druckwechsel-Adsorptionsprozeß.
